# EUROPEAN PATENT SPECIFICATION

(11) **EP 2 889 491 B1**
(45) Date of publication and mention of the grant of the patent: **06.06.2018**
(21) Application number: 13306859.3
(22) Date of filing: 24.12.2013
(51) Int. Cl.: F15B 13/043, F15B 13/16, F16K 31/124, F16K 3/00

(54) **SERVO VALVES**
SERVOVENTILE
SERVO-SOUPAPES

(43) Date of publication of application: 01.07.2015
(73) Proprietor: Goodrich Actuation Systems SAS, 95310 Saint Ouen l'Aumone (FR)
(72) Inventor: Bourdais, Nicolas, 78620 L'Etang la Ville (FR); De La Chevasnerie, Arnaud, 92410 Ville d'Avray (FR)
(74) Representative: Ramsay, Laura Anne

(56) References cited:
- WO-A1-2013/053668
- GB-A- 2 067 790
- US-A- 3 814 131

## Description

### Technical Field

The present disclosure relates to servo valves, and in particular to electrohydraulic servo valves for controlling hydraulic flow.

### Background

Electrohydraulic servo valves are continuously acting valves that transform an electrical input signal into a stepless hydraulic output (flow or pressure). Servo valves can provide precise control of position, velocity, pressure and force. Most commonly they are mounted on linear or rotary actuators to transform an electrical control signal into linear or rotary motion output of an actuator e.g. for machinery position control. Many aircraft flight controls and engine controls are actuated using servo valves. For example, in rotorcraft such as helicopters both the main and tail rotor actuators may incorporate servo valves. Servo valve applications include aerospace, climate control, fluid & gas handling, hydraulics, pneumatics, and process control.

A typical electrohydraulic servo valve comprises an electrical torque motor as a first stage controlling flow of hydraulic fluid driving the spool valve of a second stage, which can in turn control flow to an actuator driving a load. The hydraulic second stage comprises a spool and sleeve, for example a conventional four-way spool design in which the output from the valve, at a fixed pressure drop, is proportional to spool displacement from the null position. A hydraulic amplifier acts between the first and second stages to vary the piloting flow. The hydraulic amplifier can have various different designs, for example a jet pipe and receivers, a jet deflector and receivers, or a nozzle flapper.

In a jet pipe servo valve, hydraulic fluid at system pressure is directed through a jet tube towards receiver ports that are connected to the second stage spool. At the null position of the valve, the jet is directed equally between the receiver ports so that there is equal pressure on both sides of the spool. Deflection of the jet tube splits the flow unevenly between the receiver ports so as to create a differential pressure from one end of the spool to the other. The differential pressure created across the spool moves it in a direction opposite to the jet displacement.

In a conventional servo valve design, a flexible member (e.g. flexure tube or torsion bridge) is rigidly attached to the torque motor armature. A beam is also attached to the flexible member and to the armature, this beam permits the variation of the piloting flow produced by the hydraulic amplifier. Upon application of an electrical signal to the torque motor, the armature pivots and makes the flexible member and the beam bend, causing the beam to deflect and a differential pressure to be created across the spool. Electrical or mechanical feedback can be provided to return the beam to its null position.

In a mechanical feedback system, a feedback spring can be used to equilibrate the torque applied by the first stage. This mechanical feedback system is fixed at one end to the spool and at the other end to the beam. As the spool moves, the feedback spring acts to pull the beam back towards the null position. A balance between the torque motor torque, which is proportional to the input current, and the torque created by the spool displacement acting on the feedback spring and returning through the beam to the torque motor results in a particular spool position, which results in a particular hydraulic flow being passed by the servo valve. The output flow can be controlled so as to be precisely proportional to input current.

In many servo valve designs, the feedback spring is terminated by a ball that engages a slot or hole at the centre of the spool. A ball-in-slot or ball-in-hole design is used to alleviate binding problems. Movement of the ball in the slot or hole allows a variation of length for the feedback spring between the spool and the beam. However, especially when using a steel ball on the feedback wire, premature wear of the ball in the feedback mechanism often degrades the valve's performance and reduces its lifetime. Hydraulic servo valves can be expected to run for millions of cycles i.e. as long as 25 years. Alternative materials such as tungsten carbide or sapphire can provide the ball with extended wear protection but increase the cost.

Conventional electrohydraulic servo valves may suffer from a number of nonlinearities in the output. A valve non-linearity can result from malfunctions including a clearance between the ball and the spool resulting from wear of ball or the spool. This phenomenon, when the ball is loose in the spool hole, is not readily compensated in the electronics and typically requires valve repair or replacement. Some servo valve designs use a rigid pin feedback design to avoid this problem. However, when the spool moves from the null position, the feedback spring is deflected (due to soft bending stiffness) and its rigid connection to the spool applies an undesirable radial load which causes the spool to move radially within the hydraulic block. A known solution is to add a decoupling ring between the feedback spring and the beam so as to allow vertical displacement of the feedback spring/beam attachment. However this increases the number of parts to be welded/brazed/soldered together and the complexity of the valve. WO 2013/053668 A1 and US 3,814,131 disclose a servo valve comprising a force feedback system, in which one end of the feedback spring is integrally connected with the spool. There remains a need for an improved design of a feedback mechanism for an electrohydraulic servo valve.

### Summary

According to the present disclosure there is provided an electrohydraulic servo valve as defined by claim 1.

Such an electrohydraulic servo valve can have fewer parts than conventional designs because the one-piece spring member interconnects the spool and the beam without a decoupling ring or other intermediary being required to absorb resist radial displacement of the spool within the hydraulic block. A one-piece spring member being attached between the spool and the beam means that there are fewer attachment points, such as solder or brazing joints, in the feedback mechanism. In prior designs, on the other hand, additional solder or braze is required between the beam and an intermediary such as a decoupling ring, and between the intermediary and the feedback spring. By eliminating the number of metal joints in the feedback mechanism, valve manufacture is simplified and costs may be reduced. Furthermore, when the feedback spring is fixably attached to the spool, problems such as wear and ball glitch that are associated with ball-in-hole connections are avoided. The reliability and lifetime of the servo valve may thereby be improved.

The one-piece spring member is attached by at least one fixing member being one or more screws. An end of the spring member is clamped between a pair of screws passing axially through the spool. A potential problem with clamping the feedback spring between a pair of screws is that the distance between the screws may be quite variable e.g. depending on tolerances and the length of the screws. Moreover, the rotation of screws during the clamping of the feedback spring may induce undesirable rotation of the feedback spring within the spool. This can result in inconsistent clamping forces. Thus the one-piece spring member is fixably attached to the spool by at least one screw and in certain examples one or more spacers are positioned between the screws and the feedback spring. The one or more spacers may be used to accommodate any tolerances from the screws so as to ensure that the feedback spring is firmly attached to the spool without risk of hydraulic fluid leakage occurring. The fixing member(s) comprise one or more screws passing axially through the spool.

The one-piece spring member may be directly connected to the rigid beam in any way that transmits a return force in response to movement of the spool. The beam is the part of the servo valve that makes the piloting flow vary. The beam may be fixedly attached to, or integral with, the drive member (e.g. armature) of the torque motor. The flexible member may be connected to the rigid beam so as to accommodate deflection of the beam. In some designs the flexible member may be a torsion bridge. In some designs the flexible member may be a flexure tube, for example made of metal alloy material, such as e.g. beryllium copper. The beam may extend coaxially with the flexure tube. The beam may also be made of metal alloy material.

In certain examples the one-piece spring member is fixedly attached to the beam by a metal joint. In some examples the metal joint may be formed by a solder or brazing material. In some examples the metal joint may be formed by welding the spring member to the beam. In some other examples the beam may comprise a fluid jet, for example passing out of a flexure tube. In all examples, the beam transfers the torque created by loading of the feedback spring until the drive member is moved to equilibrate the torque generated by the torque motor.

The rigid beam may be arranged to control the flow of hydraulic fluid into the hydraulic block via a suitable hydraulic amplifier. In some examples the hydraulic amplifier may comprise a jet pipe and receivers, or a jet deflector and receivers (e.g. single inlet). In some other examples the hydraulic amplifier may comprise a nozzle flapper (e.g. multiple inlets). The beam may itself serve as a flapper, for example having its free end flattened on opposite sides and arranged between two nozzle openings.

The skilled person will be able to select a one-piece spring member having one or more suitable material properties, such as bending stiffness, that ensure radial displacement of the spool within the hydraulic block is resisted. For a given material, the diameter of the spring member may be selected depending on one or more of: the size of the spool; the typical extent of its axial movement; and the length of the feedback spring. The minimum bending radius of the feedback spring, which is determined by the maximum axial displacement of the spool during operation of the servo valve, should not be less than half the diameter of the spring member. Thus the one-piece spring member may have a diameter that is selected so that a minimum bending radius created by the axial movement of the spool is not less than half the diameter. For example, the spring member may have a diameter of at least 0.5 mm. The one-piece spring member takes the form of a wire (e.g. round cross-section) or a strip (e.g. rectangular cross-section).

In one optional set of examples the one-piece spring member may be made of precipitation hardening stainless steel, such as 17-7 alloy. Such stainless steels may be hardened by heat treatment to achieve a desired strength level. For example, a precipitation hardening stainless steel alloy may be heat treated at around 480 °C (900 °F) to condition CH900.

In another optional set of embodiments the one-piece spring member may be made of stainless steel spring wire, such as the spring wire available from Sandvik. For example, the spring wire made be made of austenitic stainless steel alloyed with molybdenum. The spring wire may be hard drawn, with a round or flat cross-section. Such spring wire may have a tensile strength in the range of 1900-2300 MPa.

In any of the examples disclosed herein, the one-piece spring member may be made of stainless steel spring wire manufactured according to Standard ASTM A313.

In another optional set of embodiments the one-piece spring member may be made of carbon steel music wire. Music wire is cold drawn to achieve a high tensile strength. A suitable carbon steel music wire may be designated by AMS 5112 or ASTM A228.

In another optional set of embodiments the one-piece spring member may be made of an age-hardenable, nickel-based superalloy, such as Waspaloy available from United Technologies Corporation. Such alloys have excellent strength properties, for example a tensile strength in the range of 1300-1600 MPa.

A suitable spring member may be selected using one or more material parameters. For example, the one-piece spring member may have an ultimate tensile strength of at least 1200 MPa, 1300 MPa, 1400 MPa, 1500 MPa, 1600 MPa, 1700 MPa, or 1800 MPa. The one-piece spring member may have an ultimate tensile strength up to 2000 MPa, 2100 MPa or 2200 MPa. In addition, or alternatively, the one-piece spring member may have a modulus of elasticity of at least 140 GPa, 150 GPa, 160 GPa, 170 GPa, 180 GPa, 180 GPa, 190 GPa, or 200 GPa.

### Brief description of drawings

One or more non-limiting examples will now be described with reference to the accompanying drawings, in which:
Figure 1 provides a schematic overview of an electrohydraulic servo valve;
Figures 2a to 2c illustrate an electrohydraulic servo valve according to the prior art; and
Figures 3a to 3c provide a schematic illustration of an electrohydraulic servo valve according to the present disclosure.

### Description

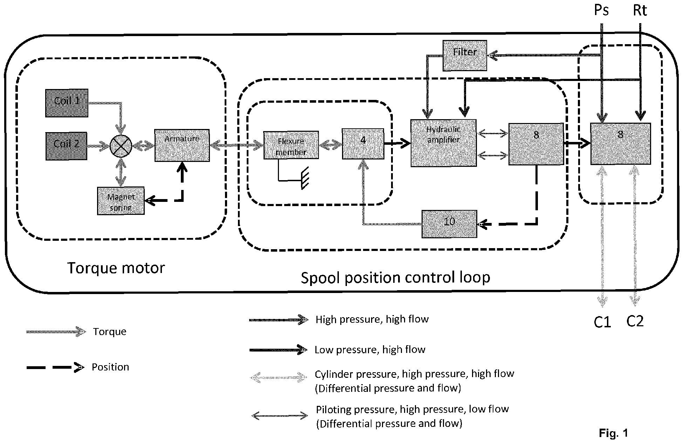

Figure 1 shows the main components of a typical 4-way control electrohydraulic servo valve system. Electrical current is fed to first and second coils of a torque motor to induce movement of an armature. In this example, the armature is connected to a flexure member (e.g. flexure tube or torsion member) and to a flexible beam 4. When an electrical current is applied to the coils, the armature piviots and a torque is applied to the flexible beam 4 in response to the electrical input. The flexible beam 4 transmits the applied torque to a hydraulic amplifier so as to control a flow of hydraulic fluid. A differential pressure/flow from the hydraulic amplifier causes axial movement of a spool 8, which may act as a piston. Movement of the spool 8 creates a return torque going through the flexible beam 4 to the torque motor armature, which balances the torque motor torque and tends to cancel the beam displacement

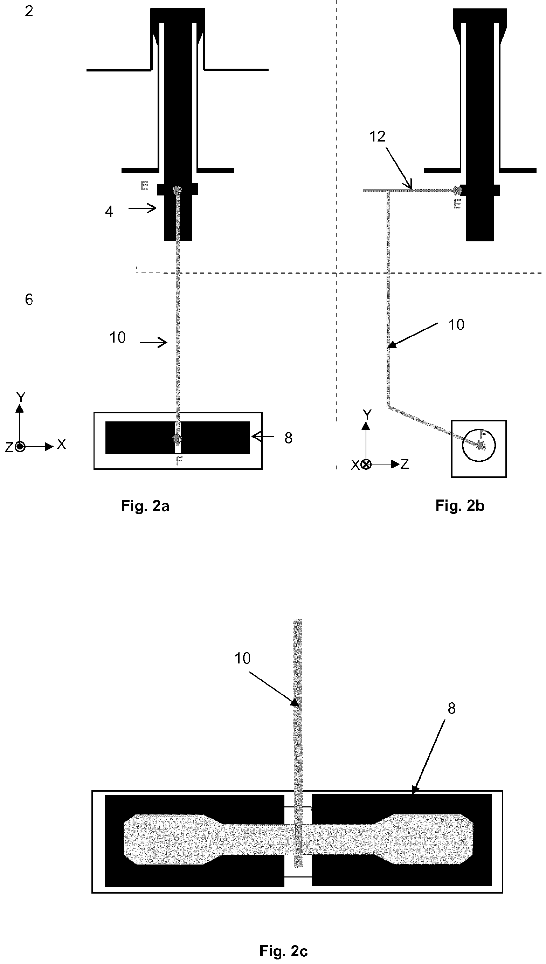

There is seen in Fig. 2a a first stage 2 of an electrohydraulic servo valve comprising a beam 4 extending from an electrical torque motor (not shown). In a second stage 6 of the servo valve, a hydraulic spool 8 is slidingly mounted in a hydraulic block for axial movement. A mechanical feedback spring 10 is connected between the beam 4 and the spool 8. As is seen in Figure 2b, the feedback spring 10 is indirectly connected to the beam 4 via an intermediate plate or decoupling ring 12. As is seen from Fig. 2c, the feedback spring 10 is clamped between a pair of axial screws passing through the spool 8. The feedback spring 10 has low bending stiffness. The decoupling ring 12 allows vertical displacement of the feedback spring 10 without degrading the bending stiffness.

As is shown schematically in Figures 2a and 2b, when the hydraulic spool 8 moves from an initial null position (seen on the left), the distance EF increases. The feedback spring 10 tends to resist axial movement of the spool 8, but there is a radial load applied to the spool 8 which makes it move radially within the hydraulic block. The decoupling ring 12 can move vertically to absorb the increasing of the distance EF, so as to avoid or reduce radial displacement of the spool 8 within the block. However this requires the additional decoupling ring 12 to be soldered in between the feedback spring 10 and the beam 4.

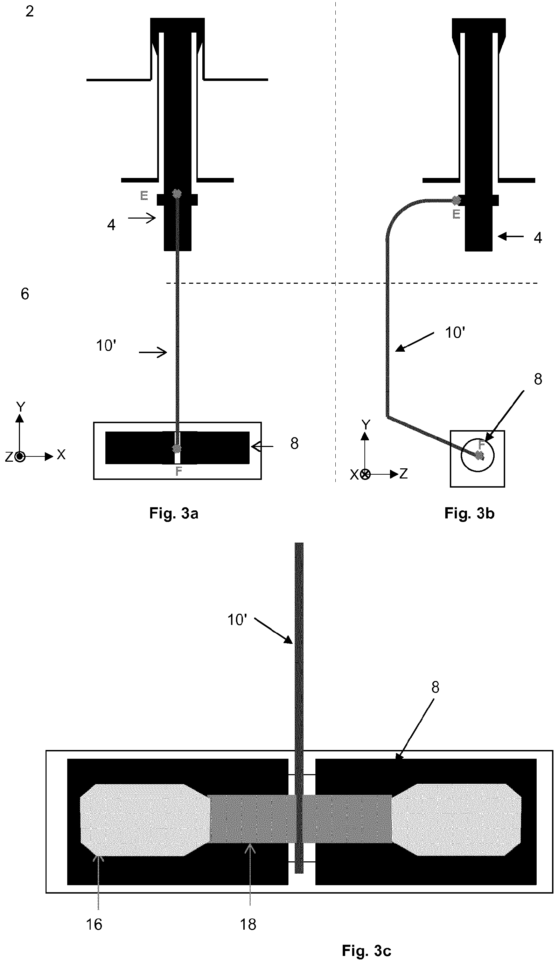

Figures 3a and 3b show front and side views, respectively, of a feedback spring arrangement according to the present disclosure. In this arrangement an intermediate plate or decoupling ring 12 is eliminated and the beam 4 is linked directly to the spool 8 by a feedback spring 10' that is a one-piece spring member connected to the beam 4 at one end, in the first stage 2, and fixedly attached to the spool 8 at its other end, in the second stage 6. As the feedback spring 10' is fixed to the spool 8, rather than terminating with a ball that is movable in a slot, rotation of the feedback spring 10' at the point F is blocked. The direct connection between the feedback spring 10' and the beam 4, without any vertical displacement, means that the spool 8 can only be displaced in the x-direction i.e. axial movement along the sleeve provided by the hydraulic block. The stiffness of the feedback spring 10' helps to ensure that radial displacement of the spool within its block is reduced or avoided. For example, the feedback spring may be made of hardened carbon steel e.g. music wire. Suitable materials for the feedback spring 10' may include, but are not limited to, 17-7 PH CH900 stainless steel, Waspaloy, and Sandvik spring wire.

As is seen from Fig. 3c, one end of the feedback spring 10' is fixably attached to the spool 8 by a pair of screws 16 and a pair of pins 18. The screws 16 come in one of a set of standard sizes, which means that if the screws alone are used to clamp the end of the feedback spring 10' then leakage of the hydraulic fluid may occur. So as to ensure a tight attachment of the feedback spring 10' to the spool 8, the pins 18 are inserted between the screws 16 and the feedback spring 10'. Different pins 18 may be selected depending on the diameter of the passage in the spool 8 in order to obtain the lowest clearance between the pins 18 and the spool 8.

### Example

In the arrangement seen in Figures 3a to 3c, a feedback spring 10' was made of music wire having a diameter of 0.7 mm and fixed to a spool 8 having a maximum x-displacement of 0.6 mm. The load recorded along the x-axis at point F was 1.20 N. The torque recorded along the z-axis at point F was 12.6 Nmm. The feedback spring 10' was observed to prevent radial displacement of the spool 8 from occurring.

In other examples the diameter of the feedback spring 10' may be chosen depending on the maximum axial displacement of the spool 8 along the x-axis. This may depend on the size of the servo valve and its application.

## Claims

1. An electrohydraulic servo valve comprising:
an electrical torque motor, a flexible member and a rigid beam (4) arranged to control a flow of hydraulic fluid into a hydraulic block, and a spool (8) slidingly mounted in the hydraulic block for axial movement in response to a differential pressure, wherein the torque motor includes a drive member connected to the rigid beam (4) and moveable to deflect the beam (4) and flexible member in response to an electrical input; and
a feedback spring (10') connected to the beam (4) at one end (E) so as to transmit a return force in response to movement of the spool (8);
wherein the feedback spring (10') is a one-piece spring member fixedly attached to the spool (8) at its other end (F) by being clamped between a pair of screws (16) passing axially through the spool (8), the feedback spring (10') thereby arranged to absorb radial displacement of the spool (8) within the hydraulic block; and the one piece spring member having a bending stiffness that ensures radial displacement of the spool (8) within the hydraulic block is resisted, **characterised by** the feedback spring (10') being directly connected to the beam (4) and
extending from its direct connection (E) to the beam (4) in a radial direction, then extending in a vertical direction towards the spool (8), and then extending in a radial direction to the other end (F),
and by the one-piece spring member being made of precipitation hardening stainless steel, austenitic stainless steel alloy, age-hardenable nickel based superalloy, or carbon steel music wire.

2. A servo valve according to claim 1, wherein one or more spacers (18) are positioned between the screws (16) and the feedback spring (10').

3. A servo valve according to claim 1 or 2, wherein the one-piece spring member is fixedly attached to the beam (4) by a metal joint.

4. A servo valve according to any preceding claim, wherein the one-piece spring member has a diameter that is selected so that a minimum bending radius created by the axial movement of the spool (8) is not less than half the diameter.

5. A servo valve according to any preceding claim, wherein the one-piece spring member has a modulus of elasticity of at least 140 GPa, 150 GPa, 160 GPa, 170 GPa, 180 GPa, 180 GPa, 190 GPa, or 200 GPa.

6. A servo valve according to any preceding claim, wherein the one-piece spring member has an ultimate tensile strength of at least 1200 MPa, 1300 MPa, 1400 MPa, 1500 MPa, 1600 MPa, 1700 MPa, or 1800 MPa.

## Patentansprüche

1. Elektrohydraulisches Servoventil, umfassend:
einen elektrischen Drehmomentmotor, ein biegsames Element und einen starren Träger (4), der angeordnet ist, um einen Strom von Hydraulikfluid in einen Hydraulikblock zu steuern, und eine Spule (8), die in dem Hydraulikblock für eine Axialbewegung als Reaktion auf einen Differenzdruck verschiebbar angeordnet ist, wobei der Drehmomentmotor ein Antriebselement einschließt, das mit dem starren Träger (4) verbunden und beweglich ist, um den Träger (4) und das biegsame Element als Reaktion auf eine elektrische Eingabe abzulenken; und
eine Rückkopplungsfeder (10'), die an einem Ende (E) mit dem Träger (4) verbunden ist, um eine Rückstellkraft als Reaktion auf eine Bewegung der Spule (8) zu übertragen;
wobei die Rückkopplungsfeder (10') ein einstückiges Federelement ist, das an seinem anderen Ende (F) fest an der Spule (8) befestigt ist, indem es zwischen einem Paar von Schrauben (16) eingespannt ist, die axial durch die Spule (8) hindurchgehen, wobei die Rückkopplungsfeder (10') dadurch angeordnet ist, um eine Radialverschiebung der Spule (8) in dem Hydraulikblock zu absorbieren; und
wobei das einstückige Federelement eine Biegesteifigkeit aufweist, durch die gewährleistet wird, dass einer Radialverschiebung der Spule (8) in dem Hydraulikblock standgehalten wird,
**dadurch gekennzeichnet, dass** die Rückkopplungsfeder (10') direkt mit dem Träger (4) verbunden ist und sich von ihrer direkten Verbindung (E) zu dem Träger (4) in eine radiale Richtung erstreckt, sich dann in eine vertikale Richtung zu der Spule (8) erstreckt, und sich dann in eine radiale Richtung zu dem anderen Ende (F) erstreckt,
und dadurch, dass das einstückige Federelement aus ausscheidungshärtendem Edelstahl, einer austenitischen Edelstahllegierung, einer aushärtbaren Superlegierung auf Nickelbasis oder Kohlenstoffstahlsaitendraht hergestellt ist.

2. Servoventil nach Anspruch 1, wobei ein oder mehrere Abstandshalter (18) zwischen den Schrauben (16) und der Rückkopplungsfeder (10') positioniert sind.

3. Servoventil nach Anspruch 1 oder 2, wobei das einstückige Federelement durch ein Metallgelenk fest an dem Träger (4) befestigt ist.

4. Servoventil nach einem der vorhergehenden Ansprüche, wobei das einstückige Federelement einen Durchmesser aufweist, der so ausgewählt ist, dass ein minimaler Biegeradius, der durch die Axialbewegung der Spule (8) erzeugt wird, nicht kleiner ist als die Hälfte des Durchmessers.

5. Servoventil nach einem der vorhergehenden Ansprüche, wobei das einstückige Federelement einen Elastizitätsmodul von mindestens 140 GPa, 150 GPa, 160 GPa, 170 GPa, 180 GPa, 180 GPa, 190 GPa oder 200 GPa aufweist.

6. Servoventil nach einem der vorhergehenden Ansprüche, wobei das einstückige Federelement eine Zugfestigkeit von mindestens 1200 MPa, 1300 MPa, 1400 MPa, 1500 MPa, 1600 MPa, 1700 MPa oder 1800 MPa aufweist.

## Revendications

1. Servo-soupape électrohydraulique comprenant :
un moteur couple électrique, un élément flexible et une poutre rigide (4) agencés pour commander un écoulement de fluide hydraulique dans un bloc hydraulique, un corps (8) monté coulissant dans le bloc hydraulique pour un mouvement axial en réponse à une pression différentielle, dans laquelle le moteur couple inclut un élément d'entraînement relié à la poutre rigide (4) et mobile pour dévier la poutre (4) et l'élément flexible en réponse à une entrée électrique ; et
un ressort de rétroaction (10') relié à la poutre (4) au niveau d'une extrémité (E) de manière à transmettre une force de retour en réponse au mouvement du corps (8) ;
dans laquelle le ressort de rétroaction (10') est un élément ressort monobloc fixé à demeure sur le corps (8) niveau de son autre extrémité (F) en étant serré entre une paire de vis (16) passant axialement à travers le corps (8), le ressort de rétroaction (10') étant ainsi agencé pour absorber un déplacement radial du corps (8) à l'intérieur du bloc hydraulique ; et
l'élément ressort monobloc ayant une résistance à la courbure qui assure qu'un déplacement radial du corps (8) à l'intérieur du bloc hydraulique soit limité,
**caractérisée par** le ressort de rétroaction (10') étant directement relié à la poutre (4) et s'étendant de sa liaison directe (E) à la poutre (4) dans une direction radiale, puis s'étendant dans une direction verticale vers le corps (8), et s'étendant ensuite dans une direction radiale vers l'autre extrémité (F),
et par l'élément ressort monobloc étant fabriqué en un acier inoxydable durci par précipitation, un alliage d'acier inoxydable austénitique, un superalliage à base de nickel durcissable par vieillissement, ou une corde en acier ordinaire.

2. Servo-soupape selon la revendication 1, dans laquelle une ou plusieurs entretoises (18) sont positionnées entre les vis (16) et le ressort de rétroaction (10').

3. Servo-soupape selon la revendication 1 ou 2, dans laquelle l'élément ressort monobloc est fixé à demeure à la poutre (4) par un joint métallique.

4. Servo-soupape selon une quelconque revendication précédente, dans laquelle l'élément ressort monobloc a un diamètre qui est sélectionné de sorte qu'un rayon de courbure minimal créé par le mouvement axial du corps (8) ne soit pas inférieur à la moitié du diamètre.

5. Servo-soupape selon une quelconque revendication précédente, dans laquelle l'élément ressort monobloc a un coefficient d'élasticité d'au moins 140 GPa, 150 GPa, 160 GPa, 170 GPa, 180 GPa, 180 GPa, 190 GPa, ou 200 GPa.

6. Servo-soupape selon une quelconque revendication précédente, dans laquelle l'élément ressort monobloc a une résistance mécanique à la traction d'au moins 1 200 MPa, 1 300 MPa, 1 400 MPa, 1 500 MPa, 1 600 MPa, 1 700 MPa, ou 1 800 MPa.
